# EUROPEAN PATENT APPLICATION

(11) **EP 4 835 112 A1**
(43) Date of publication of application: **04.11.2026**
(21) Application number: 24913856.1
(22) Date of filing: 23.12.2024
(51) Int. Cl.: C22C 21/06, C22C 21/18, B23K 35/28, B33Y 70/00, B33Y 80/00

(54) **ALUMINIUM ALLOY AND ALUMINIUM WIRE MATERIAL**

(30) Priority: 28.12.2023 RU 2023135674
(71) Applicant: Obshchestvo S Ogranichennoj Otvetstvennost'Yu "Institut Legkikh Materialov I Tekhnologij", Moscow 119049 (RU)
(72) Inventor: MANN, Viktor Khrist'yanovich, Krasnoyarsk, 660111 (RU); RYABOV, Dmitrij Konstantinovich, Krasnoyarsk, 660111 (RU); VAKHROMOV, Roman Olegovich, Krasnoyarsk, 660111 (RU); GRUSHIN, Ivan Alekseevich, Krasnoyarsk, 660111 (RU); SEFERYAN, Aleksandr Gareginovich, Krasnoyarsk, 660111 (RU)
(74) Representative: Ipek, Hazal
(86) International application number: PCT/RU2024/050326
(87) International publication number: WO 2025/144088

(57) **Abstract**

The invention refers to the metallurgy, in particular to wire materials based on aluminium alloys applied for manufacturing of products using the weld deposition and additive manufacturing methods. Composition of the proposed aluminium alloy experimentally selected for solution of the stated problem ensures high physical-mechanical properties and low porosity of end products manufactured using the hybrid-additive manufacturing methods, and the material has low density and good weldability.

## Description

### Field of invention

The invention refers to the metallurgy, in particular to an aluminium alloy and a wire material based on the aluminium alloy applied for manufacturing of products using the weld deposition and additive manufacturing methods.

### Prior art

At present, development of the state-of-the-art production methods, such as additive technologies, allows manufacturing of oversized and figurine-shaped products, since they have no constraints peculiar to the conventional material working technologies. They allow smoothing many constraints and elaborating new approaches and solutions in designing and engineering of new components and assemblies for products in high-technology industries, such as aerospace engineering, machine engineering, and automotive industry.

Development and evolution of new technologies requires creation of new high-workability materials with high physical-mechanical properties, unique features, and high economical efficiency. One of the most demanded and workable basic materials in the conventional and additive technologies is aluminium including aluminium-based alloys with high physical-mechanical properties, specific performance, and economic efficiency.

The evolution history of the state-of-the-art technologies has a trend to development of production processes at junction of several technologies - hybrid production methods. Generally, this is a combination of new methods for manufacturing of products, which complement each other and allow eliminating their individual disadvantages. One of such methods based on additive manufacturing, which is the most widely developed, is the technology of wire-arc weld deposition with direct material feeding to the product synthesising zone (WAAM - Wire Arc Additive Manufacturing). This method allows manufacturing of figurine-shaped oversized structures with a high material utilisation rate, as well as their reconstruction and repairs using the weld deposition technology. Application of welding wire made of aluminium materials provides high functional, workable, and mechanical properties of products.

At present, the existing aluminium-magnesium based materials reach high mechanical properties primarily through higher magnesium content in alloy compositions, as well as macroalloying with manganese and other elements. Introduction of much manganese and zinc to alloys results in significantly higher strength of materials, but this also negatively affects their plasticity. Consequently, this imposes certain constraints on technical basis of the equipment designed for production of semi-finished wire products and complicates their production using low-capacity production units. Therefore, a topical problem is development and production of Al-Mg wire materials featuring good weldability, high strength and plasticity as compared to the existing alloys achieved via their microalloying with rare-earth metals (REM), as well as allowing manufacturing of products from them using the additive manufacturing methods via wire-arc weld deposition with direct material feeding.

Patent documents #WO2007020041, RU2280705, DE60002061, WO9942627, RU2343218, RU2268319, WO2017077137A9 disclose alloys of various compositions determining their application in end products considered below as the prior art alloys with some disadvantages to be eliminated according to the invention.

International application #WO2007020041 discloses a product made of an aluminium alloy featuring high strength in deformed state and good corrosion resistance, but limited weldability. Furthermore, high contents of manganese and zinc notably decrease plastic properties of the material and its weld joints. High contents of silver and scandium significantly increase the material cost. Chemical composition of the alloy is represented by the following elements in % wt:

| | |
|---|---|
| Magnesium | 3.5-6.0 |
| Manganese | 0.4-1.2 |
| Iron | <0.5 |
| Silicon | <0.5 |
| Copper | <0.15 |
| Zirconium | <0.5 |
| Chromium | <0.3 |
| Titanium | 0.03-0.2 |
| Scandium | <0.5 |
| Zinc | <1.7 |
| Lithium | <0.5 |
| Silver | <0.4 |
| Aluminium | Balance |

There is also a known prior art alloy used in the aerospace industry for welded structures under medium loads (patent #RU2280705). The alloy is classified as magnalium and it has the following chemical composition in % wt:

| | |
|---|---|
| Magnesium | 4.5-6.5 |
| Manganese | 0.2-1.2 |
| Zinc | <0.2 |
| Chromium | <0.2 |
| Titanium | <0.15 |
| Silicon | <0.25 |
| Iron | <0.3 |
| Copper | <0.1 |
| Zirconium | <0.05-0.3 |
| Beryllium | 0.0001-0.01 |
| Scandium | 0.05-0.3 |
| Yttrium | 0.001-0.1 |
| Neodymium | 0.001-0.1 |
| Cerium | 0.001-0.1 |
| Aluminium | Balance |

The alloy is designed for production of wrought semi-finished products at high temperatures with further heat treatment many hours long. Maximum strength of the material is achieved at high contents of alloying elements and it is weldable. Strength of weld joints reaches 322 MPa. However, the material working process features affect the end product cost, while high manganese content results in lower plastic properties.

There is a known prior art alloy (patent #DE60002061) selected as the closest prior art with the following chemical composition of elements in % wt:

| | |
|---|---|
| Magnesium | 3.5-6.0 |
| Manganese | 0.4-1.2 |
| Zinc | 0.4-1.5 |
| Zirconium | ≤0.25 |
| Chromium | ≤0.3 |
| Titanium | ≤0.2 |
| Iron | ≤0.5 |
| Silicon | ≤0.5 |
| Copper | <0.4 |

One or some elements from the group:

| | |
|---|---|
| Tin | 0.01-0.1 |
| Silver | 0.01-0.5 |
| Scandium | 0.01-0.5 |
| Lithium | 0.01-0.5 |
| Vanadium | 0.01-0.3 |
| Cerium | 0.01-0.3 |
| Yttrium | 0.01-0.3 |
| Nickel | 0.01-0.3 |
| Bismuth | 0.005-0.1 |
| Lead | 0.005-0.1 |
| Aluminium | Balance |

Products can be produced from the alloy using various pressure shaping mechanisms, such as rolling or extrusion. The alloy is designed for application in welded structures for land and sea transports. At that, strength of weld joints of the alloy is 349 MPa. High overalloying of the alloy composition, in particular introduction of silver and scandium in concentrations close to the upper limit, significantly increases its production cost. Presence of manganese and zinc in the alloy composition results in higher strength, but in lower plasticity of the material at the same time, which negatively affects weld joint specifications and may be critical, when the additive manufacturing methods are applied.

All the prior art alloys have a common disadvantage in absence of an optimally selected alloy composition ensuring the necessary properties for production of wrought semi-finished products and products including welding wire, which ensures combination of high strength and plasticity of end products and structures produced using the additive manufacturing methods via wire-arc weld deposition with direct material feeding to the melting zone based on the microalloying principle to increase economic efficiency.

### Invention disclosure

The technical problem to be solved by the proposed invention and the technical result achieved are development and production of a new aluminium material, which can be applied for production of wrought semi-finished products and products including welding wire, which ensures combination of high strength and plasticity of end products and structures produced using the additive manufacturing methods via wire-arc weld deposition with direct material feeding to the melting zone based on the microalloying principle to increase economic efficiency.

To address the stated technical problem and achieve the associated technical result, a new and non-obvious composition of an aluminium alloy is proposed, which ensures high physical-mechanical properties and low porosity of end products manufactured using the hybrid-additive manufacturing methods, and which also has low density and good weldability. The stated technical problem is solved and the technical result is achieved by production of the alloy and aluminium wire material with the following contents of elements in % wt:

| | |
|---|---|
| Magnesium | 2.8-6.2 |
| Scandium | 0.1-0.35 |
| Zirconium | 0.05-0.2 |
| Zinc | 0.1-0.25 |
| Chromium | 0.1-0.3 |
| Vanadium | 0.01-0.15 |
| Titanium | 0.01-0.1 |
| Strontium | 0.003-0.08 |
| Lanthanum and/or cerium | 0.02-0.25 |
| Aluminium and inevitable impuri ties | Balance |

Therein, the proposed material has homogeneous grain structure based on the aluminium solid solution with structural components 2-10 µm in size and inclusions of dispersoids based on Al-(Zr,Sc), Al-Cr-Mg, Al-Mg-Cr-Ti systems less than 5 µm in size. A product made of the synthesised material produced using the hybrid-additive manufacturing methods and made of the aluminium wire material is also claimed.

### Brief description of drawings

The drawings show the following:
Fig. 1 - appearance of the synthesised blank.
Fig. 2 - appearance of the synthesised blank with defects, if the component content ranges are not adhered to.
Fig. 3 - microstructure of the synthesised material produced via wire-arc weld deposition with direct material feeding.
Fig. 4 - porosity of the synthesised material produced via wire-arc weld deposition with direct material feeding.

### Detailed invention disclosure

Composition of the proposed aluminium alloy experimentally selected for solution of the stated problem ensures high physical-mechanical properties and low porosity of end products manufactured using the hybrid-additive manufacturing methods, and the material has low density and good weldability.

Presence and content of magnesium in the selected range ensure the necessary material strength and workability during production of semi-finished products and welding wire, as well as high mechanical properties of end products and structures from the synthesised material produced using the hybrid-additive weld deposition units. Magnesium ensures hardening based on two mechanisms: solid-solution hardening of the aluminium matrix and dispersion hardening of the grain structure.

As distinct from the closest and other prior art alloys, the alloy and respectively material composition features absence of manganese and only limited content of zinc therein. Introduction of manganese to aluminium results in higher strength of the alloy. However, its introduction causes significant decrease of plastic properties and crack resistance of the material, which is critical for production using the additive manufacturing methods. Their introduction results in hardening and strengthening of the material, but in decrease of plastic properties of semi-finished and end products at the same time. Introduction of zinc results in strengthening and higher hardening effect from alloying with magnesium and manganese; however, this significantly decreases casting and corrosion properties of the material. Simultaneous introduction of manganese and zinc results in significant strengthening of materials, but in decrease of their plasticity and workability at the same time.

Introduction of transition elements (Sc, Zr, Cr, V) to the aluminium-magnesium matrix composition is supported by the fact that this improves the system properties not only through an individual contribution of each element, but also through a mutual complex effect, allowing increase of the material mechanical properties, corrosion resistance, and weldability.

Introduction of zirconium to the alloy composition results in additional hardening of the material, higher recrystallisation temperature, and enhanced effects of other elements in conjunction with them. So, addition of scandium as an alloying component in range of 0.1-0.35% wt results in significant hardening of the aluminium solid solution and, similar to zirconium, in the higher recrystallisation temperature and better weldability of the material. In addition, low-temperature annealing may result in precipitation of secondary coherent dispersoids of the stoichiometric composition (Al₃Sc), which have high stability and positively affect the material strength properties and structural stability. At the same time, zirconium partially substitutes scandium atoms in Al₃Sc compounds (up to 30%) allowing introduction of less scandium and higher economic efficiency of the composition in one respect. It also enhances the material dispersion hardening effect; therefore, its introduction should be reasonably limited to 0.2% wt.

Addition of chromium to the alloy composition in combination with titanium and vanadium allows not only higher physical-mechanical properties of the material, but also additional stabilisation of the structure uniformity thanks to the most prevailing location of these elements in the grain or dendritic cell body volume.

Strontium as a modifier improves the structure and additionally decreases average size of structural components. However, its content more than 0.08% wt results in neutralisation of the effect; therefore, its upper limit should be reasonably restricted.

Introduction of rare-earth elements in the set range to the composition allows achievement of several effects, such as modification of aluminium-magnesium eutectic inclusions via addition of cerium, which improves the structure morphology and contribution to the material mechanical properties, while lanthanum in its turn results in higher weldability of the material. Taking into account complex effects of the selected chemical elements and their concentrations, it is worth noting that the elements featuring good solubility in aluminium and forming solid solutions with it via eutectic reactions (Mg, Zn, La, Sr) ensure hardening of peripheral boundaries of the grain structure. At the same time, the transition elements and some rare-earth metals (Sc, Cr, Ce, Ti, Zr, V), which interreact based on the peritectic mechanism, improve the material physical-mechanical properties thanks to the most prevailing location in the grain or structural unit body. This complex approach provides the uniform material structure, higher properties of the aluminium matrix based on various mechanisms, and achievement of the required parameters taking into account various types of material working processes, both classic production processes, and hybrid-additive methods.

Contents of lanthanum and cerium are given as alternatives, i.e. jointly (in total) or separately.

The wire material can be produced using the conventional methods, as well as using the combined casting and extrusion processes.

The proposed invention is illustrated by the following examples.

### Example 1

At the first stage, the charge materials and additional components necessary for melting (flux compounds) were calculated. The melt was prepared in a unit of the melting complex using grade A85 primary aluminium with further addition of alloying elements at ratios according to the charging calculation.

Grade A85 aluminium was melted first followed by the melt heating up to 750-800°C and batch introduction of cerium and lanthanum to the melt with stirring till complete dissolution. Then, the remaining alloying elements were introduced at the melt temperature in range of 750-850°C. Vanadium was added in some batches with holding and stirring of the melt. The chromium master alloy was introduced next followed by zirconium, wherein dissolution was accompanied with active stirring including intermediate holding periods for heating. After that, titanium and scandium were introduced, also in batches and with holding periods. Upon introduction of scandium, temperature was increased by 30°C. Scandium addition was followed by introduction of grade Mg90 magnesium using chlorine flux to avoid burning of the alloy component. Then, the melt was thoroughly stirred and zinc was added. Strontium was introduced last in the indicated temperature range. Before each casting operation, the melt was treated using 'Carnallite' flux compound at rate of 1 kg per tonne of the melt.

The melting process of all compositions was the same as described above, except for introduction of the remaining components. Dross was removed from the melt surface and some samples were taken for chemical analysis. Based on the express analysis results, chemical composition was corrected to the calculated composition. Chemical analysis of the produced alloy compositions (please refer to Table 1) was made using an atomic emission spectrometer with inductively coupled plasma.

The produced blanks were extruded and drawn to produce wire 1.2 mm in diameter according to GOST 7871-2019. Some specimens were cut from the produced wire for the mechanical tests according to GOST 10446-80 and GOST 1497-84. The specimens were pre-annealed at 540°C for 3 h to remove cold work hardening. The tensile tests were carried out according to GOST 1497-84 using a universal tensile-testing machine of MTS Criterion 40 type. The test results are given in Table 2.

**Table 1**

| Name | Element contents, % wt | | | | | | | | | | |
|---|---|---|---|---|---|---|---|---|---|---|---|
| | Al | Mg | Zr | Sc | Zn | Cr | V | Ti | Ce | La | Sr |
| Composition 1 | Base | 2.8 | 0.05 | 0.1 | 0.13 | 0.1 | 0.01 | 0.01 | 0.01 | 0.01 | 0.01 |
| Composition 2 | Base | 3.5 | 0.07 | 0.11 | 0.13 | 0.1 | 0.05 | 0.05 | 0.03 | 0.03 | 0.02 |
| Composition 3 | Base | 3.7 | 0.12 | 0.13 | 0.15 | 0.15 | 0.08 | 0.05 | 0.05 | 0.04 | 0.05 |
| Composition 4 | Base | 3.9 | 0.15 | 0.22 | 0.15 | 0.25 | 0.12 | 0.08 | 0.07 | 0.06 | 0.05 |
| Composition 5 | Base | 4.2 | 0.17 | 0.3 | 0.15 | 0.25 | 0.15 | 0.08 | 0.09 | 0.08 | 0.05 |
| Composition 6 | Base | 4.5 | 0.2 | 0.35 | 0.25 | 0.3 | 0.15 | 0.1 | 0.1 | 0.1 | 0.08 |
| Composition 7 | Base | 5.7 | 0.2 | 0.3 | 0.22 | 0.3 | 0.15 | 0.1 | 0.1 | 0.1 | 0.05 |
| Composition 8 | Base | 6.0 | 0.18 | 0.25 | 0.16 | 0.25 | 0.12 | 0.1 | 0.08 | 0.06 | 0.05 |
| Composition 9 | Base | 6.2 | 0.15 | 0.22 | 0.15 | 0.25 | 0.14 | 0.1 | 0.1 | 0.08 | 0.05 |
| Closest prior art | Base | 5.6 | 0.05 | 0.3 | 0.25 | 0.25 | Mn 0.65 | 0.05 | Cu 0.25 | Fe 0.5 | Si 0.5 |

**Table 2**

| Composition | Ultimate tensile strength, MPa | Percentage elongation, % |
|---|---|---|
| Composition 1 | 260 | 22 |
| Composition 2 | 280 | 28 |
| Composition 3 | 290 | 26 |
| Composition 4 | 305 | 26.5 |
| Composition 5 | 325 | 27 |
| Composition 6 | 340 | 30 |
| Composition 7 | 363 | 28 |
| Composition 8 | 365 | 24 |
| Composition 9 | 367 | 26 |
| Closest prior art | 352 | 18 |

According to data in Tables 1 and 2, the proposed aluminium wire material has high mechanical properties and good workability. Higher contents of magnesium and other alloying elements within the set ranges result in higher strength properties of semi-finished wire products, while keeping high plasticity of the material, which exceeds values of the selected closest and other known prior art alloys.

### Example 2

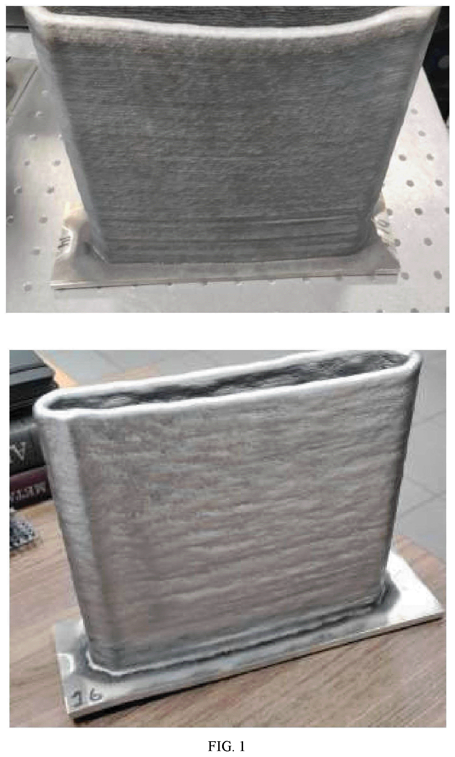

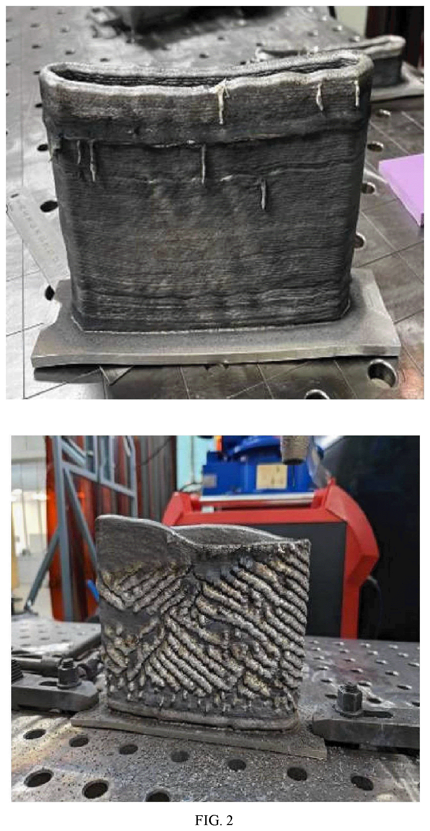

Blank products for tests (Fig. 1) with their compositions as given in Table 3 were synthesised from the aluminium wire material produced similar to Example 1 using a wire-arc additive manufacturing unit. The wire material compositions corresponding to the selected concentration range (Compositions 2-5) showed good weldability and stable weld deposition. The compositions beyond the selected range of alloying element contents (Compositions 1 and 6) demonstrated formation of surface defects associated with the material crystallisation features (Fig. 2). The growth process in the alloy with Composition 1 was accompanied with unstable conditions of the molten pool, which resulted in formation of local beads and stains, but the quantity of defects and process stability were much worse in the alloy with the more alloyed composition. During weld deposition using wire of the chemical composition corresponding to the selected closest prior art, there was burning of alloying elements observed in the growth process, which was accompanied with spattering of metal drops and formation of blanks with uneven walls.

**Table 3**

| Name | Element contents, % wt | | | | | | | | | | |
|---|---|---|---|---|---|---|---|---|---|---|---|
| | Al | Mg | Zr | Sc | Zn | Cr | V | Ti | Ce + La | | Sr |
| Composition 1 | Base | 2.5 | 0.15 | 0.05 | 0.05 | 0.08 | 0.01 | 0.01 | - | | - |
| Composition 2 | Base | 2.8 | 0.05 | 0.1 | 0.1 | 0.1 | 0.01 | 0.01 | 0.02 | | 0.003 |
| Composition 3 | Base | 3.5 | 0.07 | 0.11 | 0.13 | 0.1 | 0.05 | 0.05 | 0.12 | | 0.02 |
| Composition 4 | Base | 5.7 | 0.2 | 0.3 | 0.22 | 0.3 | 0.15 | 0.1 | 0.17 | | 0.05 |
| Composition 5 | Base | 6.2 | 0.15 | 0.22 | 0.25 | 0.25 | 0.14 | 0.1 | 0.25 | | 0.08 |
| Composition 6 | Base | 6.8 | 0.35 | 0.4 | 0.2 | 0.32 | - | - | - | | - |
| Closest prior art | Base | 5.6 | 0.05 | 0.3 | 0.25 | 0.25 | Mn 0.65 | 0.05 | Cu 0.25 | Fe 0.5 | Si 0.5 |

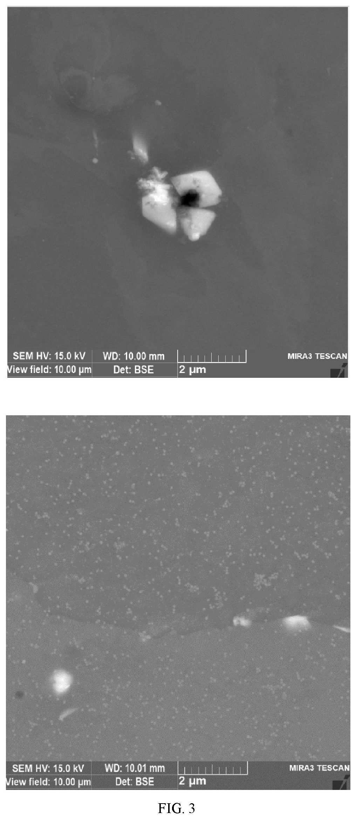

Specimens were cut from the produced blanks for studies. Microstructure of the material synthesised from Compositions 2-5 within the selected concentration range is represented by the aluminium solid solution with dissolved alloying elements and much dispersoids uniformly distributed throughout the material volume (Fig. 3). In all alloys, precipitation of dispersoids is observed throughout the aluminium matrix volume. These dispersoids exhibit a dual morphology: one type tends toward a spheroidal shape and consists essentially of compounds containing magnesium and chromium; the other type contains titanium and zirconium. Such dispersoids are surrounded by local haloes enriched with these respective elements (Compositions 2-5). The structure morphology is rougher in the compositions without addition of cerium, lanthanum, and strontium. Dispersoids in the structure are often observed with polygonal shape close to plate-like. Apices of such structural units are stress raisers and they affect plastic properties of the synthesised material (Compositions 1 and 6) (Fig. 3).

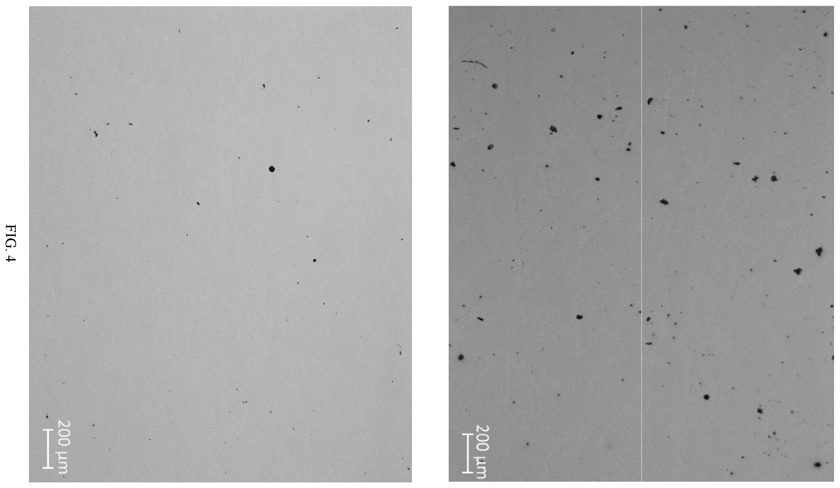

Specimens were cut from the produced blanks for porosity studies. Porosity assessment of the synthesised material according to GOST 9191-80 shows that the compositions with component concentrations beyond the proposed ranges have porosity values higher than 2%, which is the upper tolerance limit for their application (Fig. 4). The porosity assessment results are given in Table 4.

**Table 4**

| Composition | Porosity, % |
|---|---|
| Composition 1 | 3.70 |
| Composition 2 | 1.70 |
| Composition 3 | 1.57 |
| Composition 4 | 1.62 |
| Composition 5 | 1.74 |
| Composition 6 | 3.2 |
| Closest prior art | 2.9 |

### Example 3

Flat specimens were cut from some blanks (Compositions 4, 5 and Closest prior art) produced in Example 2 for assessment of mechanical properties according to GOST 1497-84. The specimens were exposed to preliminary heat treatment at 350°C for 3 h. The obtained test results are given in Table 5. The synthesised material has higher plasticity as compared to the closest prior art, while it is less alloyed and more economically efficient.

**Table 5**

| Composition | Ultimate tensile strength, MPa | Percentage elongation, % |
|---|---|---|
| Composition 4 | 320 | 26 |
| Composition 5 | 345 | 22 |
| Closest prior art | 332 | 15 |

### Example 4

According to Examples 1-3, the optimal composition for manufacturing of products combining high physical-mechanical properties, good weldability, low porosity, and high workability at all manufacturing stages is the composition given in Table 6.

**Table 6**

| Name | Element contents, % wt | | | | | | | | | |
|---|---|---|---|---|---|---|---|---|---|---|
| | Al | Mg | Zr | Sc | Zn | Cr | V | Ti | Ce + La | Sr |
| Composition 1 | Base | 4.5 | 0.15 | 0.22 | 0.15 | 0.25 | 0.1 | 0.07 | 0.04 | 0.03 |

So, chemical composition of the proposed alloy allows production of the synthesised material and products from it featuring medium strength, low porosity, good weldability/workability, and higher plasticity as compared to the closest prior art. Thanks to that, the proposed alloy can be applied in the hybrid-additive manufacturing using the method of wire-arc weld deposition with direct material feeding to the product synthesising zone (WAAM technology).

According to the proposed claims, the scope of legal protection is sought for the aluminium-based alloy applied for manufacturing of products using the weld deposition and additive manufacturing methods and containing magnesium, scandium, zirconium, zinc, chromium, vanadium, titanium, cerium, lanthanum, and strontium. The alloy has the following contents of components taking into account aluminium and related impurities, % wt:

| | |
|---|---|
| Magnesium | 2.8-6.2 |
| Scandium | 0.1-0.35 |
| Zirconium | 0.05-0.2 |
| Zinc | 0.1-0.25 |
| Chromium | 0.1-0.3 |
| Vanadium | 0.01-0.15 |
| Titanium | 0.01-0.1 |
| Strontium | 0.003-0.08 |
| Lanthanum and/or cerium | 0.02-0.25 |
| Aluminium and inevitable impurities | Balance |

An aluminium wire material produced from the alloy is also proposed, where this material has homogeneous grain structure based on the aluminium solid solution. The preferably homogeneous grain structure based on the aluminium solid solution has structural components preferably 2-10 µm in size and inclusions of dispersoids with preferably spheroidal morphology of particles preferably less than 5 µm in size. A product made of the synthesised material produced using the hybrid-additive manufacturing methods and made of the aluminium wire material is also proposed.

## Claims

1. Aluminium-based alloy applied for manufacturing of products using the weld deposition and additive manufacturing methods and containing magnesium, scandium, zirconium, zinc, chromium, vanadium, titanium, cerium, lanthanum, and strontium with the following contents of components taking into account aluminium and related impurities, % wt:
| | |
|---|---|
| Magnesium | 2.8-6.2 |
| Scandium | 0.1-0.35 |
| Zirconium | 0.05-0.2 |
| Zinc | 0.1-0.25 |
| Chromium | 0.1-0.3 |
| Vanadium | 0.01-0.15 |
| Titanium | 0.01-0.1 |
| Strontium | 0.003-0.08 |
| Lanthanum and/or cerium | 0.02-0.25 |
| Aluminium and inevitable impurities | Balance |

2. Aluminium wire material produced from the alloy according to Claim 1 with homogeneous grain structure based on the aluminium solid solution.

3. Aluminium wire material according to Claim 2, wherein homogeneous grain structure based on the aluminium solid solution has structural components preferably 2-10 µm in size and inclusions of dispersoids with preferably spheroidal morphology of particles preferably less than 5 µm in size.

4. Product made of the synthesised material produced using the hybrid-additive manufacturing methods and made of the aluminium wire material according to Claim 2 or 3.
